# EUROPÄISCHE PATENTSCHRIFT

(11) **EP 0 732 678 B1**
(45) Veröffentlichungstag und Bekanntmachung des Hinweises auf die Patenterteilung: **22.04.1998**
(21) Anmeldenummer: 96102787.7
(22) Anmeldetag: 24.02.1996
(51) Int. Cl.: G09F 3/02, B41M 5/26

(54) **Mehrschichtiges Etikett**
Multilayer label
Etiquette multicouche

(30) Priorität: 16.03.1995 DE 19509505
(43) Veröffentlichungstag der Anmeldung: 18.09.1996
(73) Patentinhaber: Beiersdorf Aktiengesellschaft, 20245 Hamburg (DE)
(72) Erfinder: Külper, Klaus, Dr., 25421 Pinneberg (DE); Koops, Arne, 22083 Hamburg (DE); Riekhof, Hans-Christian, Dr., 22085 Hamburg (DE)

(56) Entgegenhaltungen:
- EP-A- 0 065 766
- DE-A- 3 917 294
- DE-A- 3 925 563
- DE-A- 4 108 377
- DE-C-19 509 505
- DE-U- 8 130 861
- US-A- 5 340 628

## Beschreibung

Die Erfindung betrifft ein mehrschichtiges Etikett mit einer Trägerschicht aus Kunststoff, die ein Additiv enthält, das unter Licht-, insbes. Laserbestrahlung einen Farbumschlag zeigt, und das mit einer oder mehreren Schutzfolien abgedeckt ist.

Zur Identifizierung von Produkten, Steuerung von Fertigungsprozessen sowie zur Qualitätskontrolle werden vielfach automatisch lesbare Informationsträger genutzt. Bisher verwendete Blechschilder werden durch moderne Systeme abgelöst wie Barcode-Datenträger oder elektronische Datenspeicher. Letztere können aus Kostengründen, aufgrund spezifischer Umgebungsbedingungen wie hohe Temperaturen, Chemikalienkontakt sowie bei Verwendung in Bereichen mit starken elektromagnetischen Feldern häufig nicht eingesetzt werden. Treten im Laufe der Funktionsdauer des Informationsträgers Beanspruchungen auf, die zu mehr oder minder vollständiger Zerstörung des Datensatzes führen können wie mechanische Beanspruchungen, Kontakt mit aggressiven Chemikalien oder Überdecken der Information bei Lackierprozessen, so sind "normale" Einschichtetiketten ungeeignet.

Für derartige Anwendungsfelder existieren mehrschichtigen Datenträgersysteme, wie sie in EP 065 766 B1 beschrieben werden: ein plattenförmiger Codierungsträger wird an dem Werkstück fest montiert - es liegt ein mehrschichtiger Aufbau vor: die Information ist z.B. durch Standarddruckverfahren wie Matrixdruck, Thermotransfer etc. auf die unterste Lage, das Basisetikett, aufgebracht; eine oder mehrere Lagen einer transparenten, selbstklebenden Schutzfolie sind darauf lösbar befestigt - nach Arbeitsvorgängen wie z.B. Lackieren wird jeweils die oberste Schutzfolie samt der Lackschicht abgezogen und entfernt; die ursprüngliche Information liegt für weitere Nutzung wieder frei. Geeignete, nichtklebende Anfasser erleichtern dem Verwender das selektive Entfernen der jeweils obersten Lage. Derartige Sandwich-Systeme finden z.B. Einsatz als Prozeßsteuerhilfen in Form von selbstklebenden Etiketten beim Aufbringen des Korrosionsschutzes und beim Lackieren von Fahrzeugkarosserien.

Die Herstellung derartiger Datenträgerverbunde ist jedoch aufwendig - um eine just-in-time Fertigung zur gewährleisten, müssen dem Verwender getrennt zwei unterschiedliche Etiketten geliefert werden: ein Basisetikett, welches vor Ort entsprechend den aktuellen Fertigungsaufträgen bedruckt werden muß, sowie das ein- oder mehrschichtige Schutzetikett. Zwei separate Abrollungen für die Etiketten, die Logistik für zwei unterschiedliche Etikettenprodukte, hohe Ansprüche an die Genauigkeit beim Herstellen des Verbundes aus Basisetikett und Schutzetikett(en), die laufende Kontrolle sowie das rechtzeitige Wechseln des Farbbandes/ Nachfüllen der Druckfarbe machen dieses Verfahren komplex und betreuungsintensiv.

Es sind ferner bereits Etiketten bekannt, die mittels Laserbestrahlung beschriftbar sind, so aus DE G 81 30 861 U1. Darin sind kontrastreiche Schichten überlagert und zur Beschriftung wird die obere Schicht mit einem Laserstrahl durchgebrannt. Die dabei entstehenden Emissionen und Gase erfordern spezielle Schutzvorkehrungen wie Absaugungen und Filtersysteme. Die Herstellung derartiger mehrschichtiger Laseretiketten ist komplex und aufwendig.

Auch Warenbahn-Etiketten sind aus DE 39 25 563 C2 bekannt, die aus einem Träger und darauf aufgebrachter Kunststoff-Beschichtung besteht, welche aus mit dunkler Farbe durchsetztem PTFE besteht. Dieses Etikett ist mittels eines Laserstrahls partiell aufhellbar.

Aus DE 41 08 377 A1 ist ein Folienpapier-Laminat bekannt, das von seiner einen Seite her mittels Druck (Kugelschreiber) und von seiner anderen Seite her mittels Laserstrahl beschrieben werden kann. Einsetzbar etwa als Codierungsträger für z.B. ein zu montierendes Kraftfahrzeug, insbesondere die Karosserie, sind solche Etiketten jedoch nicht. Ein ähnliches Laminat wird im Dokument US-A- 5 340 628 gezeigt.

Aufgabe der Erfindung war es, ein als Codierungsträger geeignetes Laseretikett zu schaffen, das die Nachteile des Standes der Technik vermeidet oder zumindest vermindert. Um für den Anwender die Herstellung des fertigen Verbundes aus bedrucktem Basisetikett, welches die Information trägt, und den ein- oder mehrlagigen, transparenten selbstklebenden Schutzfolienschichten deutlich zu vereinfachen, ist eine Bereitstellung des fertigen, noch unbedruckten Verbundes aus Basis- oder Schutzetiketten wünschenswert. Dieser kann kostengünstiger und mit hoher Qualität durch Zusammenlaminieren der einzelnen Lagen und anschließendem Stanzen hergestellt werden. Als Datenträgersystem mit dem spezifischen Schutz für die aufgedruckten Informationen kann es aber nur genutzt werden, wenn eine nachträgliche Bedruckung zwischen dem Basisetikett und der Schutzfolie möglich ist.

Dieses läßt sich überraschend und vorteilhaft realisieren, ohne daß das Basisetikett und das Schutzetikett temporär wieder getrennt werden müssen. Wird als Basisetikett ein Material eingesetzt, auf welchem berührungslos mittels Lichtstrahlung, insbesondere Laserbestrahlung die Informationen aufgebracht werden kann, so ist die Entfernung der Schutzfolien nicht notwendig.

Für die Trägerschicht eigenen sich allgemein flächige Kunststoffprodukte, die aufgrund ihrer chemischen Zusammensetzung und/oder durch Zugabe von speziellen Additiven mit Lasern beschriftbar sind. Für eine kontrastreiche und automatisch lesbare Beschriftung muß darauf geachtet werden, daß die Schutzfolien im Wellenlängenbereich des eingesetzten Lasers möglichst keine starken Absorptionen aufweisen; dieses gilt sowohl für das Trägermaterial als auch für die Klebemasse der Schutzfolien. Zur einzelnen Ausgestaltung der Schutzfolien sei auf EP 65 766 B1 verwiesen. Bei Einsatz z.B. eines Nd-YAG-Lasers (emittierte Wellenlänge 1,06 µ), der aufgrund seiner Strahlführung besonders für komplexe und wechselnde Beschriftungen prädestiniert ist, können nahezu alle im sichtbaren Bereich klaren, transparenten Kunststoffolien verwendet werden wie Polyester, Polyethylen, Polyacrylate, Polypropylen etc. Selbiges gilt auch für die Klebemassen, wobei Polyacrylatklebemassen, die aus aliphatischen Bausteinen polymerisiert sind, bevorzugt werden.

Geeignete Additive u.a. solche, wie sie in DE 39 17 294 beschrieben sind, und insbesondere Farbpigmente und Metallsalze, vor allem Kupferhydroxidphosphat oder auch Iriodin, ein Perlglanzpigment, wie es von der Firma Merck im Handel erhältlich ist. Diese Additive werden dem Basispolymeren (wie z.B. in G 81 30 861 beschrieben), insbesondere in der Größenordnung von einigen Promille bis maximal 10 Prozent zugemischt. Nach Herstellung von flächigem Material durch bekannte Verfahren wie Extrusion, Gießen, Beschichten etc. mit ggf. nachträglicher strahlenchemischer Vernetzung werden derartige Folien mit Selbstklebemassen beschichtet, die den späteren Einsatzzwecken anzupassen sind. Eine Abdeckung mit silikonisiertem Trennpapier ergibt dann den typischen Aufbau für Vormaterial, aus dem sich Etiketten fertigen lassen.

Geeignete Trägerschichten bestehen aus Kunststoffen wie Polyester, Poly-(Meth)acrylate, Polycarbonat und Polyolefine sowie strahlenhärtbaren Systemen wie ungesättigte Polyester. Epoxy-, Polyester- und Urethanacrylate, wie sie auch für UV-Druckfarben Anwendung finden, insbesondere solchen aus einem Basispolymeren gemäß G 81 30 816, nämlich aliphatischen Urethanacrylat-Oligomeren.

Geeignete Selbstklebemasse sind handelsüblich erhältlich, aber auch in der Literatur beschrieben, so in der DE-PS 15 69 898.

Bei Nutzung der Standardlaser, speziell der weitverbreiteten Nd-YAG-Festkörperlaser mit einer Wellenlänge von 1,06 µm, findet im Auftreffpunkt des Lasers auf die Materialoberfläche eine Farbänderung oder ein Farbumschlag statt und es werden scharfe, kontrastreiche Beschriftungen und Kennzeichnungen erhalten. Neben einer deutlichen Vereinfachung der Folienherstellung ergeben sich als weitere positive Aspekte, daß die Beschriftungsgeschwindigkeit z. T. erheblich gesteigert werden kann. Mußte bisher eine 5 - 25 µm dicke Deckschicht verdampft und als Aerosol abgetragen werden, so ist für das neue Beschriftungsverfahren ein geringerer Energiebedarf anzusetzen, was bei vorhandener Laserleistung eine Erhöhung der Beschriftungsgeschwindigkeit erlaubt.

Liegt ein geeignetes Basisetikett vor, so kann bei geeigneter Einstellung des Beschriftungslasers die Basisfolie selektiv durch die eine oder mehreren Lagen der Schutzetiketten beschriftet werden, ohne daß diese dazu entfernt werden müssen und ohne daß gasförmige Emissionen entstehen. Letzteres ist besonders wichtig, da entstehende Gase zu Blasenbildungen zwischen dem Basisetikett und dem Schutzetikett führen würden - bedingt durch die dann unterschiedliche Lichtbrechung bzw. Reflektion würden Fehllesungen mit Scannern oder Klarschriftlesegeräten die Folge sein.

Weiterhin vorteilhaft an dem geschilderten Verfahren ist, daß die auf das Basisetikett aufgebrachte Information nicht nur durch die Schutzfolien gegen mechanische, thermische und chemische Angriffe weitgehend geschützt ist, sondern selbst nach Entfernung der letzten Lage der Schutzfolien ist die Information gegen ungewollte Veränderungen gesichert, da diese sich nicht auf der Oberfläche aufgebracht befindet, sondern in die Kunststoffschicht eingeschrieben ist, d.h. sich in der Folie selbst befindet.

Auf die oben beschriebene Art und Weise lassen sich in das fertig laminierte Mehrschicht-Verbundetikett wie Logos, Zeichen Buchstaben, Zahlen, Barcodes etc. einbringen, die im späteren Verlauf zur Identifizierung sowie zur Steuerung von Prozessen genutzt werden können.

### Beispiel 1

Entsprechend dem DE G 81 30 861 wird der strahlenhärtende Lack aus 90 % eines handelsüblichen Polyurethanacrylats und 10 % HDDA (das ist: Hexandioldiacrylat) hergestellt. Unter intensivem Rühren werden 2,5 % des aus DE 39 17 294 bekannten Additiv Kupferhydroxidphosphat eingearbeitet. Die Paste wird auf eine hochglänzende, biaxial gereckte Polyesterfolie gleichmäßig mit 75 pm ausgestrichen und unter Inertgas mit Elektronenstrahl (EB) ausgehärtet: Nun erfolgt eine Beschichtung mit bekannten Polyacrylathaftkleber in einer Schichtdicke von 25 g/m², nämlich mit einer hellen, klaren Polyacrylatlösemittelklebemasse, die überwiegend aus aliphatischen Acrylatmonomeren wie Ethylhexyl- und Butylacrylat sowie Acrylsäure polymerisiert ist. Das Ganze wird auf einen weißen Haftuntergrund zur Kontrasterhöhung geklebt. Als Schutzfolie kommt eine wasserklare, 50 pm dicke Polyesterfolie, Kaladex® 1030 von ICI, zum Einsatz, die ebenso klebend beschichtet ist.

Als Beschriftungslaser dient ein tesa Label Laser®, ein Nd-YAG-Festkörperlaser mit λ = 1064 nm Wellenlänge (Lasernennleistung 25 W (CW) Multimode): Belaserung mit einer Pulsfrequenz von 5 kHz, Schreibgeschwindigkeit 350 mm / sec.

Es wird ein konturenscharfes, kontrastreiches Schriftbild erhalten - Gasblasen im Beschriftungsbereich sind nicht zu erkennen. Bei der Belaserung mit Barcodes werden mit Scannern automatisch lesbare Beschriftungen erhalten.

### Beispiel 2

Basisetikett von ca. 100 µm Dicke analog Beispiel 1, jedoch mit 15% TiO₂ als Pigment weiß deckend eingefärbt und mit Additivzusatz von 1,5 % Kupferhydroxidphosphat. Als Schutzfolie dient eine hochtransparente Polypropylen-Folie. Ergebnisse wie in Beispiel 1.

### Beispiel 3

Analog Beispiel 1, jedoch als Basisetikett eine 75 pm Folie aus weiß pigmentiertem PBT (Vestodur® X 7060 von Firma Hüls). Als Schutzfolie dient ein Schutzetikett aus einer hochtransparenten PET-Folie (36 p) wie Melinex® OD von ICI.

## Patentansprüche

1. Mehrschichtiges Etikett aus einer
a) Trägerschicht aus Kunststoff, die
b) ein Additiv enthält, das unter Lichtbestrahlung, insbesondere Laser-Bestrahlung einen Farbumschlag zeigt, und die
c) auf der einen Seite mit einer Selbstklebemasse beschichtet ist, welche
d) ggf. mit einem Trennpapier oder eine Trennfolie abgedeckt ist, wobei
e) die Trägerschicht auf der anderen Seite durch eine oder mehrere übereinander angeordnete Schutzfolien abgedeckt ist, die
f) transparent, für Laser-Bestrahlung durchlässig und selbstklebend ausgerüstet sind.

2. Laseretikett nach Anspruch 1, dadurch gekennzeichnet, daß die Trägerschicht aus einem Lack besteht, insbesondere aus einem gehärteten Lack, vorzugsweise einem strahlengehärteten Lack.

3. Laseretikett nach Anspruch 1, dadurch gekennzeichnet, daß die Trägerschicht aus einem elektronenstrahlengehärteten Polyurethanacrylatlack besteht.

4. Laseretikett nach Anspruch 1, dadurch gekennzeichnet, daß die Trägerschicht aus einem Polybutylenterephthalat besteht.

5. Laseretikett nach Anspruch 1, dadurch gekennzeichnet, daß das Additiv ein Pigment, insbesondere Kupferhydroxidphosphat oder Iriodin ist, das ggf. zusammen mit dem Additiv Titandioxid verwendet wird.

6. Laseretikett nach Anspruch 1, dadurch gekennzeichnet, daß die Trägerschicht eine Dicke von 10 bis 200 µm, insbesondere von 50 bis 100 µm aufweist, und daß das Additiv in Mengen von 0,1 bis 10 Gew.-%, insbesondere von 0,5 bis 5 Gew.-% bezogen auf das Gesamtgewicht der Trägerschicht eingesetzt wird.

7. Laseretikett nach Anspruch 1, dadurch gekennzeichnet, daß die Schutzfolie bzw. die Schutzfolien wenigstens über denen für Laserbestrahlung vorgesehenen Bereichen der Trägerschicht transparent und für Laserbestrahlung durchlässig sind, und die Trägerschicht gegen chemische, mechanische elektrische oder thermische Belastungen schützen, insbesondere chemikalienbeständig, lösungsmittelfest, elektrisch isolierend und/oder temperaturbeständig sind.

8. Laseretikett nach Anspruch 1, dadurch gekennzeichnet, daß die Schutzfolie bzw. die Schutzfolien jeweils einseitig mit einer transparenten, für Laserbestrahlung durchlässigen Klebstoffschicht versehen sind und jeweils einen Anfasser zum Abziehen aufweisen.

9. Laseretikett nach Anspruch 1, dadurch gekennzeichnet, daß die jeweils äußere Schutzfolie die nächst-innere Schutzfolie mitsamt deren Anfasser bzw. die Trägerschicht abdeckt.

10. Verwendung eines mehrschichtigen Laseretiketts nach einem der Ansprüche 1 - 9 zum maschinenlesbaren Kennzeichnen mittels eines Lasers, worauf das mit dem Laseretikett gekennzeichnete Substrat bearbeitet, lackiert oder dergleichen wird, worauf dann zwecks erneuter Lesbarkeit die oberste Schutzfolie abgezogen wird, worauf ggf. ein weiterer Arbeitsgang angeschlossen wird mit erneutem Abziehen einer ggf. weiteren Schutzfolie.

## Claims

1. Multilayer label comprising
a) a base layer made of plastic containing
b) an additive which exhibits a colour change on irradiation with light, in particular irradiation with a laser, and which base layer
c) is coated on one side with a self-adhesive composition which
d) is, if desired, covered by a release paper or a release film, where
e) the base layer is covered on the other side by one or more protective films arranged one on top of the other which
f) are transparent, permeable to laser irradiation and are provided with a self-adhesive coating.

2. Laser label according to Claim 1, characterized in that the base layer comprises a paint, in particular a cured paint, preferably a radiation-cured paint.

3. Laser label according to Claim 1, characterized in that the base layer comprises an electron-beam-cured polyurethane acrylate paint.

4. Laser label according to Claim 1, characterized in that the base layer comprises a polybutylene terephthalate.

5. Laser label according to Claim 1, characterized in that the additive is a pigment, in particular copper hydroxide phosphate or Iriodin, which is, if desired, used together with the additive titanium dioxide.

6. Laser label according to Claim 1, characterized in that the base layer has a thickness of from 10 to 200 µm, in particular from 50 to 100 µm, and in that the additive is employed in an amount of from 0.1 to 10% by weight, in particular from 0.5 to 5% by weight, based on the total weight of the base layer.

7. Laser label according to Claim 1, characterized in that the protective film or films is (are) transparent and permeable to laser irradiation at least above the areas of the base layer intended for laser irradiation, and protect the base layer against chemical, mechanical, electrical or thermal stresses, in particular are resistant to chemicals, solvents and/or heat and/or are electrically insulating.

8. Laser label according to Claim 1, characterized in that the protective film or films is (are) provided on one side with a transparent adhesive layer which is permeable to laser irradiation and in each case has (have) a tab for peeling off.

9. Laser label according to Claim 1, characterized in that the outer protective film in each case covers the next-inward protective film together with its tab or the base layer.

10. Use of a multilayer laser label according to one of Claims 1 to 9 for machine-readable marking by means of a laser, after which the substrate marked with the laser label is processed, painted or the like, after which, in order to re-establish readability, the uppermost protective film is peeled off, followed, if desired, by a further operation with further peeling-off of any further protective film.

## Revendications

1. Etiquette multicouche formée
a) d'une couche support en matière synthétique
b) qui contient un additif qui manifeste une inversion de couleur sous l'effet d'un rayonnement lumineux, en particulier sous l'effet d'un rayonnement laser, et
c) qui est revêtue sur un côté d'une masse auto-adhésive,
d) qui est recouverte, le cas échéant, d'un papier de séparation ou d'un feuil de séparation,
e) la couche support étant recouverte de l'autre côté d'un ou de plusieurs feuils de protection disposés les uns sur les autres,
f) qui sont transparents, perméables au rayonnement laser et auto-adhésifs.

2. Etiquette laser selon la revendication 1, caractérisée en ce que la couche support se compose d'une laque, en particulier d'une laque durcie, de préférence d'une laque durcie par rayonnement.

3. Etiquette laser selon la revendication 1, caractérisée en ce que la couche support se compose d'une laque d'acrylate de polyuréthanne durcie par rayonnement électronique.

4. Etiquette laser selon la revendication 1, caractérisée en ce que la couche support se compose d'un téréphtalate de polybutylène.

5. Etiquette laser selon la revendication 1, caractérisée en ce que l'additif est un pigment, en particulier le phosphate hydroxyde de cuivre ou l'Iriodin, qui est utilisé, le cas échéant, conjointement à un additif de dioxyde de titane.

6. Etiquette laser selon la revendication 1, caractérisée en ce que la couche support présente une épaisseur de 10 à 200 microns, en particulier de 50 à 100 microns, et que l'additif est utilisé en quantités de 0,1 à 10 % en poids, en particulier de 0,5 à 5 % en poids, par rapport au poids total de la couche support.

7. Etiquette laser selon la revendication 1, caractérisée en ce que le ou les feuils de protection est (sont) transparent(s), au moins dans les domaines de la couche support prévus pour le rayonnement laser et sont perméables au rayonnement laser, et protège(nt) la couche support contre les sollicitations chimiques, mécaniques, électriques ou thermiques, en étant en particulier résistant(s) aux produits chimiques, aux solvants, en étant isolant(s) du point de vue électrique et/ou en étant stable(s) vis-à-vis de la température.

8. Etiquette laser selon la revendication 1, caractérisée en ce que le ou les feuil(s) de protection est (sont) pourvu(s) à chaque fois d'une couche d'adhésif transparente, perméable au rayonnement laser, et présente(nt) à chaque fois une languette de prise pour le retrait.

9. Etiquette laser selon la revendication 1, caractérisée en ce que le feuil de protection à chaque fois externe recouvre le feuil de protection immédiatement sous-jacent vers l'intérieur, y compris sa languette de prise, respectivement la couche support.

10. Utilisation d'une étiquette laser multicouche selon l'une quelconque des revendications 1 à 9, en vue du marquage qui peut être lu à la machine par l'intermédiaire d'un laser, le substrat marqué grâce à l'étiquette laser étant mis en oeuvre, laqué ou traité de manière similaire, à la suite de quoi, en vue d'une capacité de lecture renouvelée, la couche de protection supérieure est retirée, puis, le cas échéant, suit une étape de travail supplémentaire avec un retrait renouvelé d'une couche de protection le cas échéant supplémentaire.
